# EUROPEAN PATENT SPECIFICATION

(11) **EP 1 392 586 B1**
(45) Date of publication and mention of the grant of the patent: **06.10.2004**
(21) Application number: 02748739.6
(22) Date of filing: 04.06.2002
(51) Int. Cl.: B65G 69/28

(54) **INTEGRAL FORMWORK SYSTEM FOR THE CONSTRUCTION OF PITS FOR LOADING RAMPS**
INTEGRIERTES SCHALSYSTEM ZUR HERSTELLUNG VON LADERAMPENGRUBEN
SYSTEME DE COFFRAGE SOLIDAIRE POUR LA CONSTRUCTION DE FOSSES POUR RAMPES DE CHARGEMENT

(30) Priority: 05.06.2001 IT MI20011189
(43) Date of publication of application: 03.03.2004
(73) Proprietor: Campisa S.r.l., 20030 Palazzolo Milanese (Milano) (IT)
(72) Inventor: NELZI, Giampaolo, I-22070 Appiano Gentile (IT)
(74) Representative: De Gregori, Antonella
(86) International application number: PCT/EP2002/006186
(87) International publication number: WO 2002/098773

(56) References cited:
- WO-A-99/44928
- DE-A- 3 310 278
- DE-C- 19 906 486
- DE-U- 20 019 493
- US-A- 6 106 191

## Description

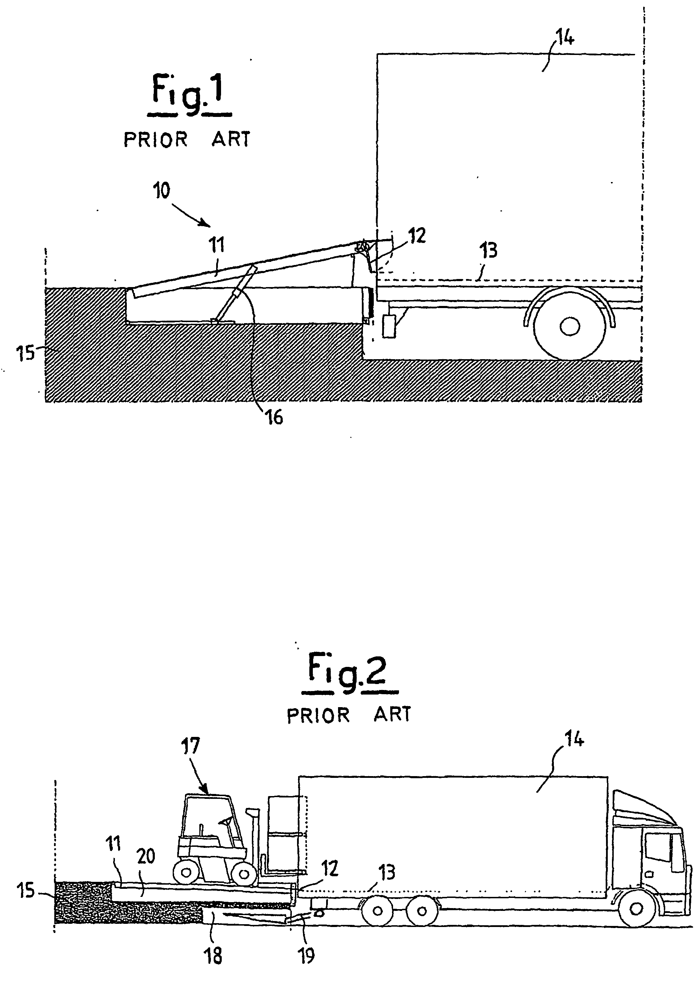

The present invention concerns an integral formwork system for the construction of pits for loading ramps e.g. see: document WO-A-9944928. Loading ramps are known as equipment used to connect the flatcar of vehicles with the loading platform; in particular, as illustrated more clearly in figure 1, a loading ramp generically indicated as (10), is normally composed of a metal platform (11) on which an extension (12) is applied, with radial or telescopic articulation.

For connection with the flatbed (13) of the transport vehicle (14) the ramp (10) hinged to platform (15) on the side opposite to the vehicle side (14) is raised using a hydraulic or mechanical system (16) and its extension (12) is extended and connected with the flatbed (13) of the vehicle (14) to form an inert connecting surface between the platform and the vehicle that fluctuates with the rise and fall of the vehicle suspension, and that also permits the fork lifts, like that shown as (17) in figure 2, to rise directly from the platform onto the vehicle flatbed to unload the merchandise.

However, if the vehicle is equipped with a rear tail- gate, a problem arises because it is impossible to connect the vehicle flatbed with the platform given the interference created by the tailgate.

To overcome this problem generally a second pit (18) is built under the loading ramp to insert the tailgate (19) of the vehicle (14) that is lowered to correct position and placed horizontally while the vehicle (14) is reversing (see figure 2).

In this case, the construction of the main pit (20) for loading ramp (10) is designed according to the type of loading ramp installed afterwards.

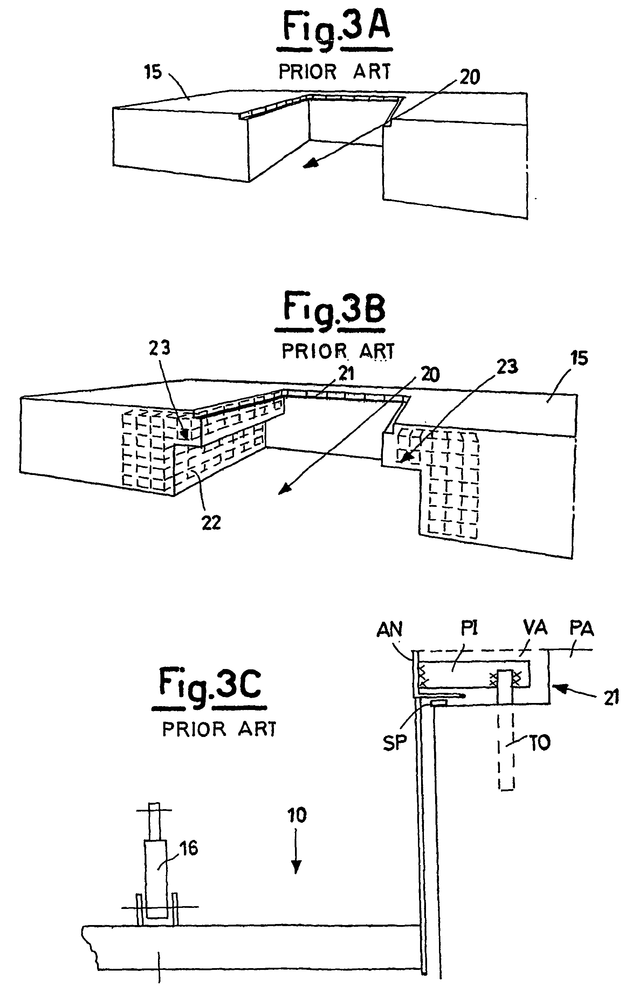

As far as the construction of the pits is concerned, traditional type pits exist that are built using formwork that remains included in the cast concrete, or the so-called "prefabricated" pit built with prefabricated building methods. This latter type of pit is illustrated in particular in Figure 3A, that shows a basic pit (20), without the recess underneath to hold the tailgate, and in figure 3B, that shows a pit (21), with a recess (22) underneath for the tailgate; both types of pit (20) (21) are normally built using formwork that can be removed after the cast concrete has set.

The loading ramps to be set in these pits are the so-called "suspended" type: that is they are inserted from above and suspended by their upper edge on the perimeter of the pit that is equipped with a concrete tooth or rim for this purpose; the total ramp height is calculated so that it does not reach the recess underneath for the tailgate.

In particular, in order to block the ramp from sinking and to fix it to the edge of the pit, the ramp is equipped with a frame around three sides, generally built with angle iron AN and with the horizontal edge at the bottom (this detail can be seen in figure 3C).

The ramp is inserted and the three sides framed with the angle iron are positioned on the three sides of the pit perimeter with the concrete tooth. Shims SP are inserted under the angle iron to make the upper surface level with the height of the finished flooring surface. At this point plates PI are welded between the angle iron AN and the reinforcing rods TO previously set in the cast concrete, and the floor paving PA is finished by filling the remaining space VA that has been formed. (Figure 3C).

However, this assembly system presents numerous defects including those described below.

First of all, the space VA always represents a kind of "patching up" of the flooring, and is therefore subject to breaking. It also requires flexible jointing around the perimeter, and this is particularly expensive.

Moreover, the laying of reinforcing for each of the overhanging ledges on the sides (23) (which can be seen particularly in Fig. 3B) also contributes to a considerable price increase.

In addition, the casting must necessarily be made using plain concrete, whereas the total system requires the application and form dismantling of several recoverable formworks to be able to carry out the casting of several units at a time, plus the application of protruding reinforcing rods in the tooth around the perimeter, an operation that must be performed with great precision by hand.

Lastly, the system requires the insertion of the "suspended" ramp and its frame. In addition, the finishing work for paving the flooring needs to be carried-out after the ramp insertion, resulting in the inevitable consequences connected with splattering the ramp with the finishing cement and damage to the mechanical ramp parts because of the irrigation necessary during concrete work.

Therefore the object of the present invention is to overcome the problems described previously, and in particular, to indicate an integral formwork system for the construction of loading ramp pits that is disposable, with specific construction, lightweight, resistant, and compact in size.

Another object of this invention is to provide integral formwork for the construction of loading ramp pits that is possible with a single casting operation from zero level (ground level) as far as the level under the flooring surface, and this too will be made in a single casting operation after laying the reinforcing grid under the flooring.

Another object of this invention is that of indicating integral formwork for the construction of loading ramp pits that permits a considerable saving in materials (concrete) and permits the possibility casting the flooring in a single operation beginning at the formwork pit level without the need for connecting structures (such as flexible jointing) that are complicated and/or expensive.

These objects can be attained by using integral formwork for the construction of loading ramp pits according to claim 1, to be used as reference to avoid repetition.

Further advantageous technical characteristics are described in the appended claims.

The advantage of using formwork according to the invention is that it is possible to mount the loading ramp at a later time after all the "wet work" has been completed, thus preventing any damage from water irrigation that inevitably also wets the mechanical parts of the system.

Moreover, in the preferred embodiments, the formwork in question can be composed of decomposable appropriately reinforced sheet metal panels and/or piping and/or sections that can be bolted together in order to minimize transport costs.

Lastly, the system according to this invention also permits the construction of the overhanging ledge of the pit without heavy reinforcing rods, and when the work is completed, the overhanging ledges act as the support elements for the ramp and the vehicle positioned on the ramp.

Other advantages and characteristics of this integral formwork for the construction of loading ramp pits will be demonstrated in greater detail in the following description and the illustrations in the figures enclosed, that are provided as examples but that are not in any manner limitative, in which:
- Figures 1 and 2 represent the loading systems for traditional type vehicles;
- Figures 3A and 3B show two examples of known loading ramp pits;
- Figure 3C shows an example of the fixing system of a loading ramp to the edge of the pit according to the known prior art;
- Figure 4 is an exploded view of an integral formwork system for the construction of loading ramp pits according to the present invention;
- Figure 5 represents a perspective view of assembled formwork according to this invention;
- Figure 6 is the plan view of the formwork shown in the previous illustration according to this invention;
- Figure 7 represents a perspective view of a slab at ground level equipped with the construction rods for the assembly of the formwork according to this invention;
- Figure 8 represents a view of the finished pit built using the formwork described in the present invention;
- Figure 9 represents a perspective view of the formwork according to this invention, equipped with further accessories;
- Figure 10 shows a plan view of the formwork for a single loading bay;
- Figure 11 represents a plan view of another form built using this formwork according to this invention, both connected to each other;
- Figure 12 represents a plan view of a form using this formwork, as an alternative to that shown in Figure 11, according to this invention;
- Figure 13 is an intermediate vertical section view of formwork according to this invention;
- Figures 14-17 represent several views in intermediate vertical section of formwork as shown in figure 13 during the various stages of construction;
- Figure 18 shows a perspective view of the complete unit that demonstrates the construction sequence of an integral formwork system according to the present invention;
- Figure 19 shows an exploded view of an embodiment of the formwork according to the invention as an alternative to that shown in Figure 4.

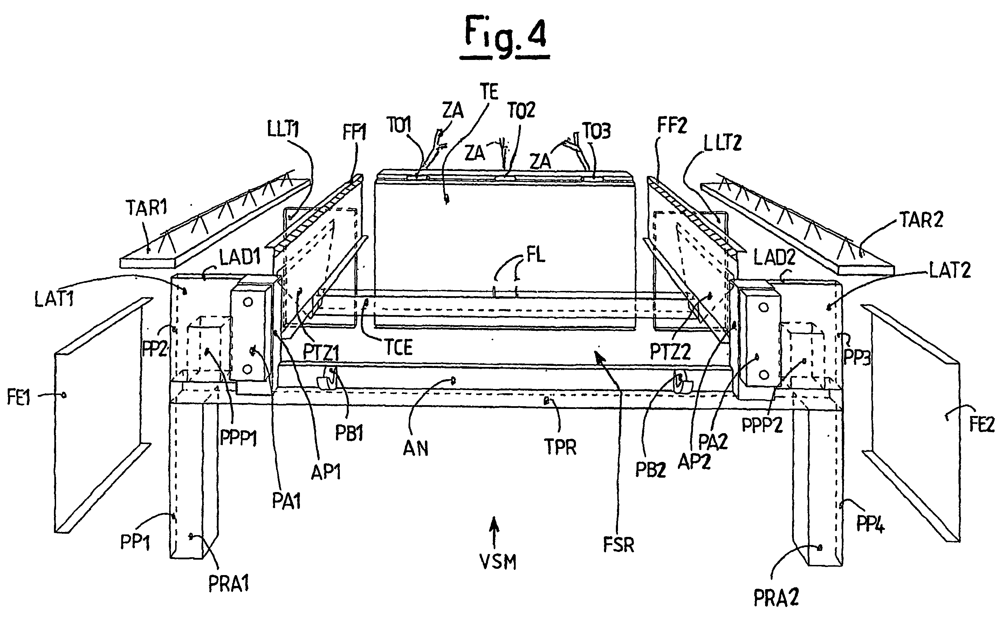

With special reference to figures 4-19, integral formwork for the construction of loading ramp pits according to this invention, is preferably composed of a previous connecting beam AN composed of one or more pipings and/or horizontal metal sections TPR, whose ends are fixed, facing downwards, to two specially shaped sections, preferably open PRA1, PRA2 that define the width of the space VSM for the insertion of the tailgate.

Above, or before the mounting of the piping TBR two extension supports are mounted PB1, PB2 on which the loading ramp extension is positioned, in the case where this is flared or radius type.

The sections AP1, AP2 are fixed facing upwards on the top and sides of the piping TPR, as well as on the joins where the formwork is united, and also to the front of the buffers PA1, PA2; the plates LAT1, LAT2 are fixed further up and on the sides of the buffers finishing preferably on a level with the piping TPR. The sections PRA1, PRA2 and the plates LAT1, LAT2 finish preferably with a part PP1, PP2, PP3, PP4 folded at the back.

The plates LAT1, LAT2 finish preferably in the upper part, with the side LAD1, LAD2 folded backwards, while the parallelepipeds PPP1, PPP2 are fixed inside the plates LAT1, LAT 2.

The formwork also includes two side panels FF1, FF2, with a height approximately the same size as the sections AP1, AP2, preferably composed of sheet metal plates with reinforcing at the bottom, and with the side preferably turned inwards to the inside of the pit, plus a folded over edge (or an additional fixed section) at the top with the side facing outwards.

Two other external side panels are also foreseen FE1, FE2, preferably terminating at the top and bottom with folded edges facing inside the formwork, and a head TE preferably composed of a metal plate finished at the bottom with a folded edge turned inwards towards the inside of the pit, and at the top with a folded edge or reinforcing section to which one or more piping portions are applied TO1, TO2, TO3. These piping portions are inserted, in comb-style, within other piping portions present on the flatbed of ramp (11), designed to form the hinge between the head of ramp (10) and the platform (15) with the insertion of special rods. One or more strong reinforcing rods ZA are inserted behind the tubing TO1, TO2, TO3.

The formwork is also composed of two side plates for the head LLT1, LLT2, preferably with the edges folded over on all four sides towards the inside of the pit, and at least one reinforced joist TAR1, TAR2, for each side of the formwork, preferably composed of a brick tiled and/or concrete base, in which one or more extra-adhesion iron rods are inserted in lengthwise direction, bound with right-angle rods, preferably spire-shaped, and in turn, bound at the top by one or more longitudinal rods, positioned at an adequate distance from the base; the total complex is constructed according to well known prefabricated reinforced joist conformation used for flat slab construction, for example. Lastly, there is a central joist TCE whose ends are fixed to two plates PTZ1, PTZ2, preferably trapezoidal shaped, facing upwards, one or more flanges FL to support the loading ramp raising cylinder, and fixed to the joist TCE, sufficient bolts and/or rivets to bolt all the various parts together through holes drilled for this purpose, and an adequate number of strong reinforcing rods, set in appropriate positions to maintain the formwork in the cement.

It should be remembered that the conformation described above can be varied in shape and components to attain the same objective.

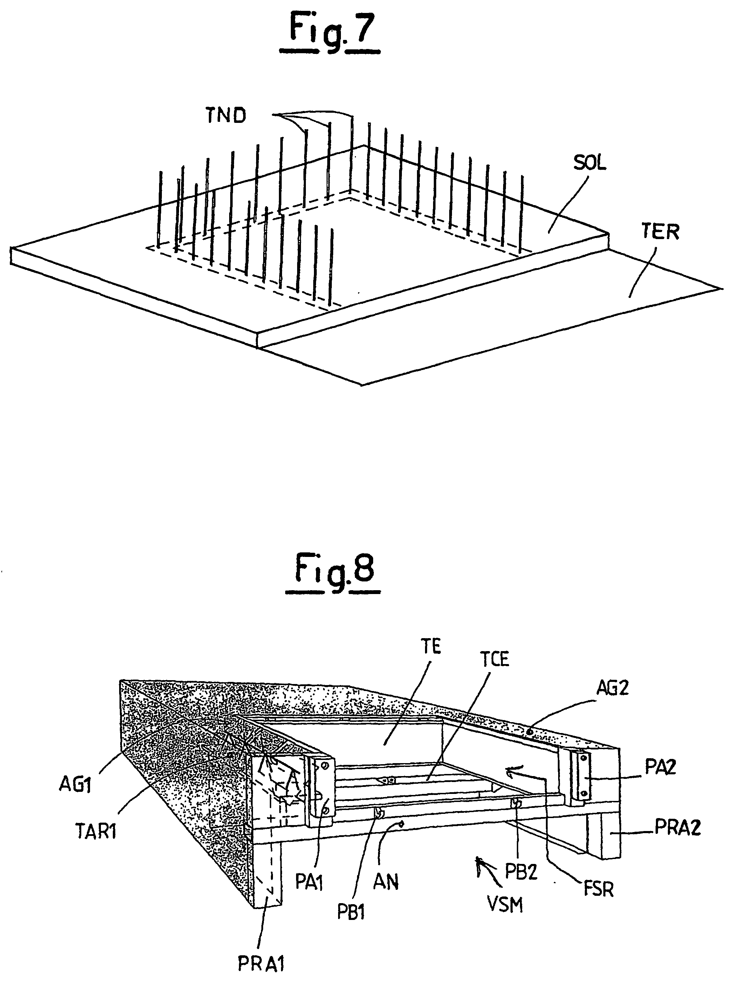

The integral formwork system according to the invention, assembled and concreted as shown in figure 8, illustrates all the above-mentioned components connected together, preferably by bolting.

One of the most important characteristics of this formwork, illustrated in figure 8, is represented by the front AN connecting beam that forms the external face of the loading platform, designed to share the weight of the castings between the left and right hand ledge portions AG1, AG2.

Parts AG1, AG2 form an extension that is not supported, given that, below, the opening of the space VSM for the installation of the tailgate is wider than the width of the upper pit FSR, used for the loading ramp installation.

Figure 4 shows that the perimeter of the space for the tailgate is formed by the head TE starting from the front AN connecting beam, moving towards the left, of the external side FE1 of the head plate LLT1, of the head TE, of the head plate LLT2 and of the external side FE2 that is reconnected to the front AN section to form the complete perimeter.

In preferred but notlimiting embodiments the joist TCE is applied in contact with the lower edge, and below the side panels FF1, FF2, and is equipped at each end with the two plates PTZ1, PTZ2 that are positioned and fixed at the exterior of the two side panels FF1, FF2.

Moreover, the two plates PTZ1, PTZ2 are folded over at the top towards the exterior, and this provides the configuration for certain adherence in the cast concrete thanks to the simultaneous action of the other elements such as the extra-strong iron rods, for example.

In the same way, the perimeter of the pit for the loading ramp FSR is formed as follows: starting from the front connecting beam AN moving towards the left, with the vertical section AP1 preferably fixed to the AN, the internal side FF1, the head TE, and the external side FF2, that reconnects with the vertical section AP2 (preferably integral with AN) and to the front section AN, to close the complete perimeter.

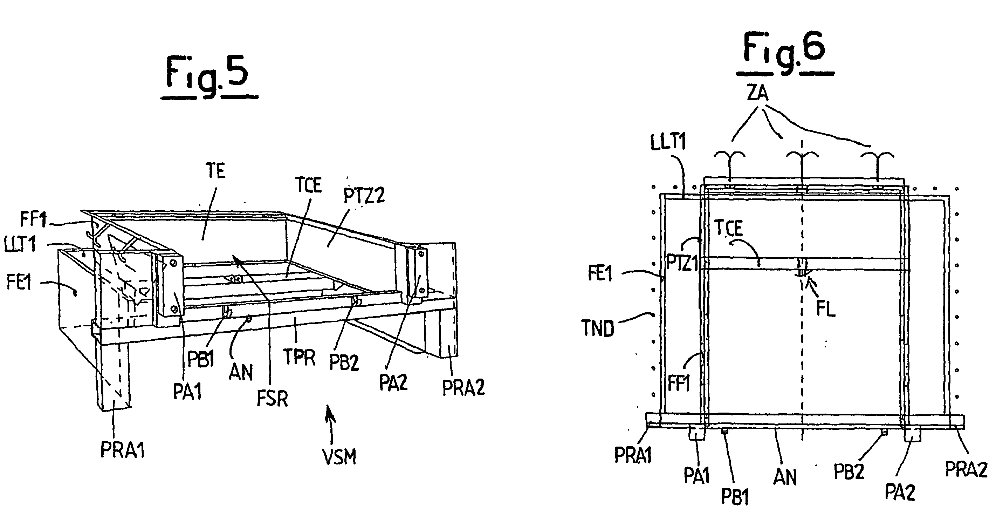

As a result it is provided an assembled formwork according to the invention, that is illustrated in detail in figures 5 and 6 where, in particular, it can be seen that in the side positions there are empty spaces between the external side of the area VSM to house the tailgate FE1 and the side panel FF1 of the ramp pit FSR; these empty spaces are covered by at least one reinforced joist TAR1, positioned against the plate PTZ1 and the side panel FF1, and supported at each end on the parallelepiped PPP1 and on the head plate LLT1 and at the side , on the external wall FE1.

In a symmetrical position, it is foreseen to install at least one other reinforced joist TAR2 with the same support systems and with the same characteristics.

The assembled formwork has the same height as the finished platform, and this can be obtained either by constructing the elements PRA1, FE1, LLT1, TE, LLT2, FE2, PRA2, to measure at the same height, or by using well known systems that make it possible to adjust the elements to the correct height.

The construction sequence of integral formwork according to the invention is basically as follows:

First of all, for the pit construction a simple slab is created SOL (see figure 7) at ground level TER in which pieces of construction rod TND are arranged so that they protrude for a height of about 1 meter.

The formwork is then assembled as described above and as illustrated in Figure 5, and then rods TND are positioned inside on the slab SOL (See figure 6 for easy reference).

After this, the metal structure is positioned with precision, and shims are inserted underneath so that the upper edge is level with the flooring surface; then the two prefabricated reinforced joists TAR1, TAR2 are placed on the sides of the structure to contain and form the overhanging side sections.

The structure created in the manner described above provides a rapid efficient system with precise measurements and that is perfectly square for forming the tailgate space without the need for any further joists to support the concrete casting.

In particular, the use of the prefabricated joists TAR1, TAR2 permits the reduction of the height of the slab at the level of the side overhanging sections AG1, AG2 and consequently a considerable reduction in costs for expensive internal reinforcing.

In order to reduce the amount of concrete necessary, to be replaced with inert material that is less expensive, the side and rear casting must be contained by the construction of a simple perimeter wall, with light reinforcing that can be contained within a thickness of only 15 cm, for example.

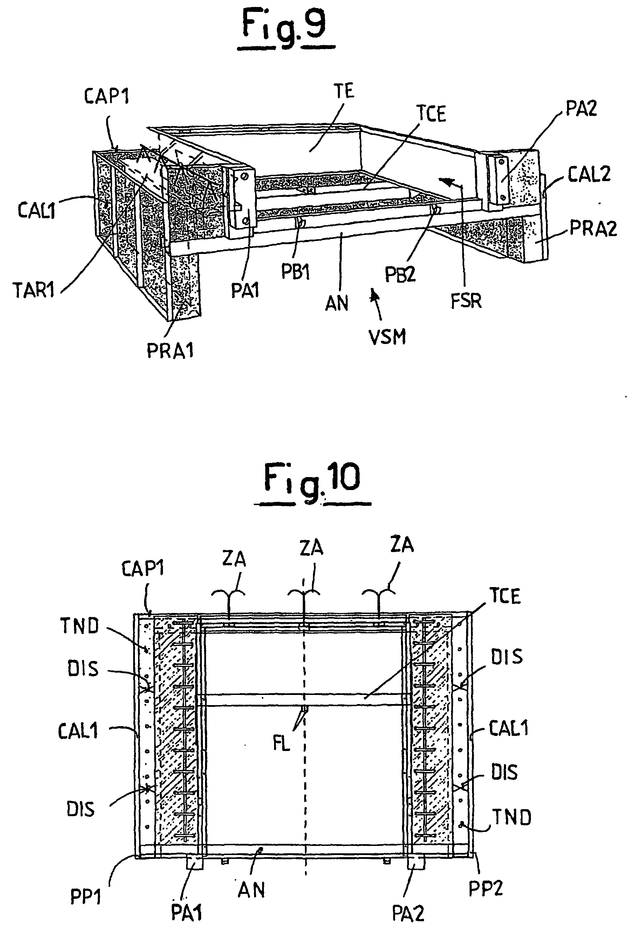

The present invention also provides for this aspect with the use of side forms for concreting CAL 1, CAL2, and rear form CAP1 shown in figure 9, preferably at a fixed height 1 meter for example so they can be used to cast the concrete to the most suitable height. As a result, there are various possibilities for application such as single or multiple loading bays for example.

In particular, single loading bays can be created at first such as the model shown in figure 10 as an example, where the side forms CAL1 that can be recovered are marked for identification. These are preferably connected by bolting to the recoverable rear form CAP1 and the folded over portion PP1, PP2 of the respective elements PRA1, PRA2.

The recoverable forms CAL1, CAP1 are preferably maintained at an established distance from the internal perimeter of the space for the tailgate, from the shims DIS (of a known type) and within this distance they contain the rods TND already positioned in the base slab SOL. The adjacent or close position of the loading bay can make the casting of the formwork more economical, because if the forms are united together this can exclude the side form CAL1 on the adjacent sides.

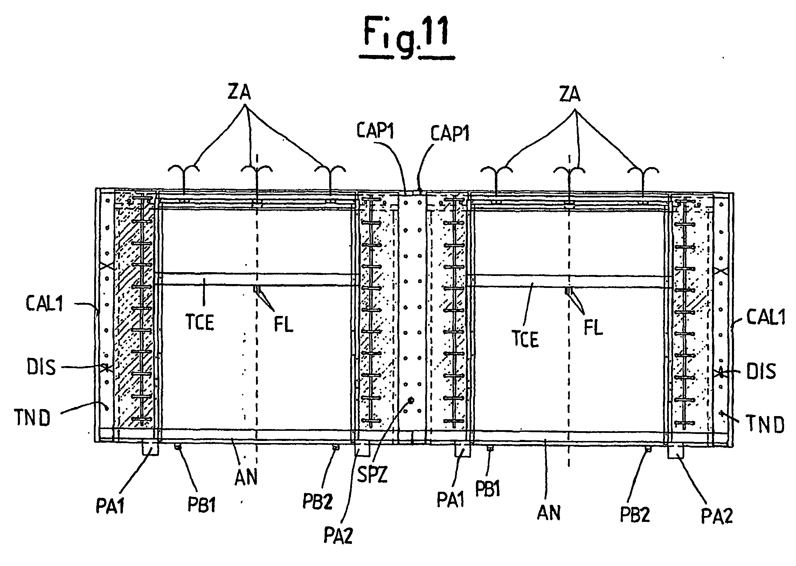

When the bays are adjacent to each other, the rear form CAP1 are also bolted together directly, and in this case, the space SPZ between the two ramps is cast in a single operation without the need for installing the form CAP1 (e.g. see figure 11).

It should be noted that the formwork described in this invention has been designed preferably with an external measurement of 3.3 meters and a front width of the two lower sections PRA1, PRA2 of 15 centimeters; this is because the resulting exterior creates reinforced perimeter walls, 15 centimeters thick, resulting in a considerable saving in concrete but also guaranteeing the necessary support for the unit even with reinforcing supplied by only a few vertical iron rods.

Therefore, this system provides a tailgate space three meters wide (excellent size) with a depth equal to that of the ramp and in any case, no smaller than 2.3 meters (the size that is a little over current minimum measurement requirements, that in any case saves a considerable amount of concrete).

Another important characteristic is represented by the fact that the distance of 3.3 meters is basically the minimum space permitted for loading bays for vehicles without rear doors, whereas, vehicles with rear doors require a minimum space of approximately 3.5 meters.

Therefore the formwork according to the invention permits the construction of a loading bay with the minimum possible space, by fixing adjacent forms directly together as shown in figure 11.

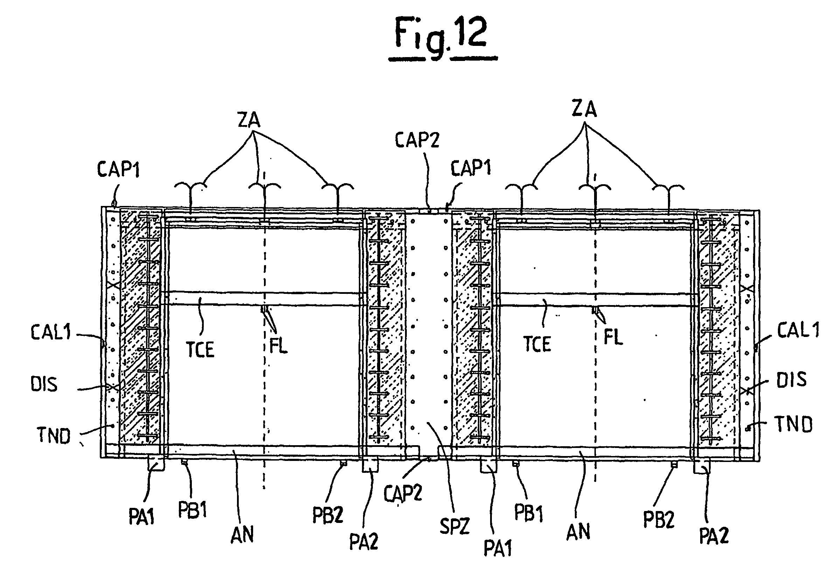

For the construction of loading bays with a larger space than 3.3 meters, the width of the front connecting beam AN can be varied as shown in figure 12 that shows an alternative system to that shown in figure 11. A form panel CAP2 can be interposed in the system in front and at the rear.

According to the space required between the loading bays, it is possible to assemble form panels CAP2 of a larger size, or single bays can be built, as shown in figure 10, and connected by the front curbing using well-known methods.

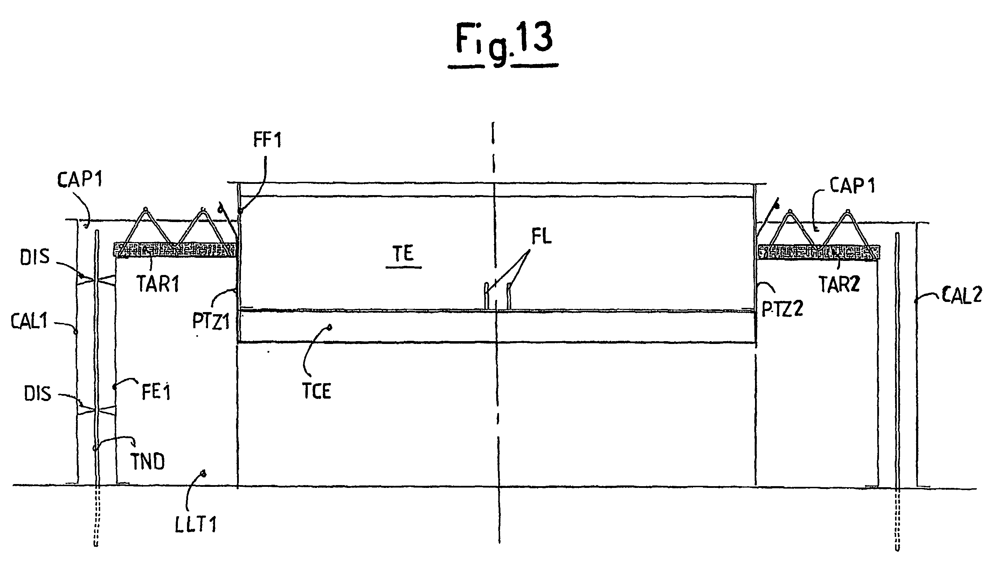

Once the formwork has been prepared in the required conformation, work proceeds with the preferred method as shown in figures 13-19, that illustrate intermediate vertical sections of the formwork, object of this invention, along the central tubing TCE.

More in particular, figure 13 shows said formwork section ready for concrete casting, with the perimeter forms CAL1, CAL2, CAP1 spaced by using shims DIS.

Moreover in figure 13 the final details of the flanges PTZ1, PTZ2 can be seen. These are preferably folded over to follow the reinforcing of the joists TAR1, TAR2, and in their upper portion, they preferably bear an element with greater grip in the concrete, a rod with improved adherence capacity for example, aimed at a better maintenance of the downward thrust transmitted by the raising cylinder from the ramp to the central joist TCE.

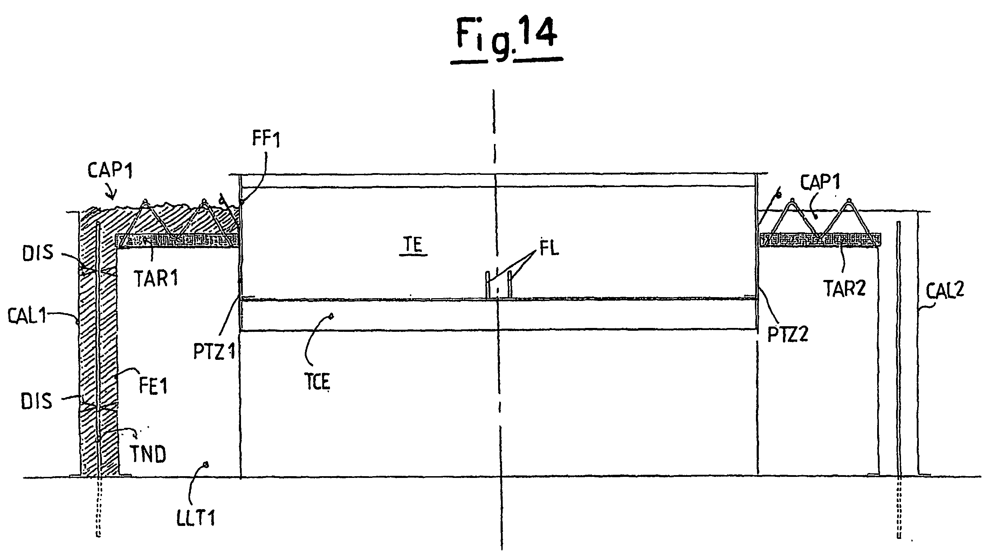

Figure 14 shows said vertical section of the formwork according to this invention with the casting (shown only in the left hand side of the drawing), that is poured preferably up to the upper edge of the forms CAL1, CAL2, CAP1.

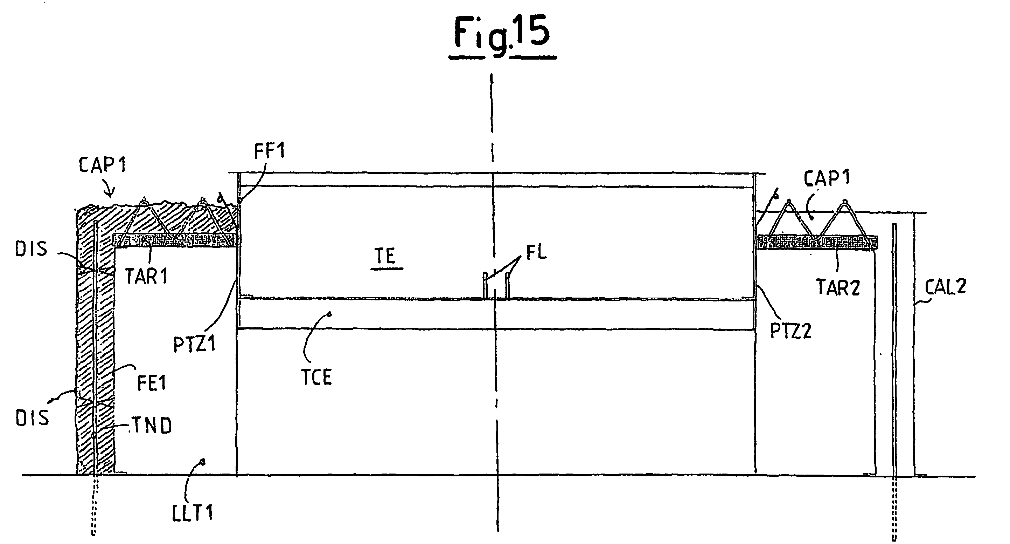

Figure 15 shows said section of the formwork with the casting (shown only in the left hand side of the drawing) described in figure 14; in the case of figure 15 it shows that the forms CAL1, CAL2, CAP1 have been recovered after the concrete has set.

On the right hand side of the drawing, CAL1 and CAP1 are left visible in position for comparison.

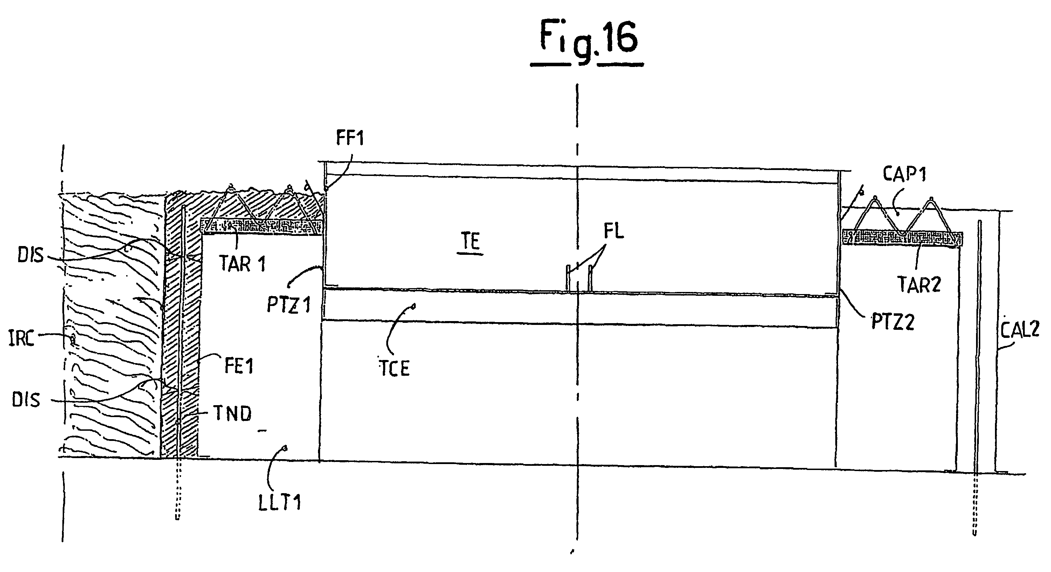

Figure 16 shows the vertical section of the formwork with the previous casting (shown only in the left hand side of the drawing) where the rolled and compacted inert material IRC is piled against the sides and rear; naturally the inert material IRC is piled against the side only if the form is the first or last in the row or if it is a single form, while where adjacent forms are constructed, filling is carried out with concrete only.

On the right hand side of the drawing, CAL1 and CAP1 are left visible in position for comparison.

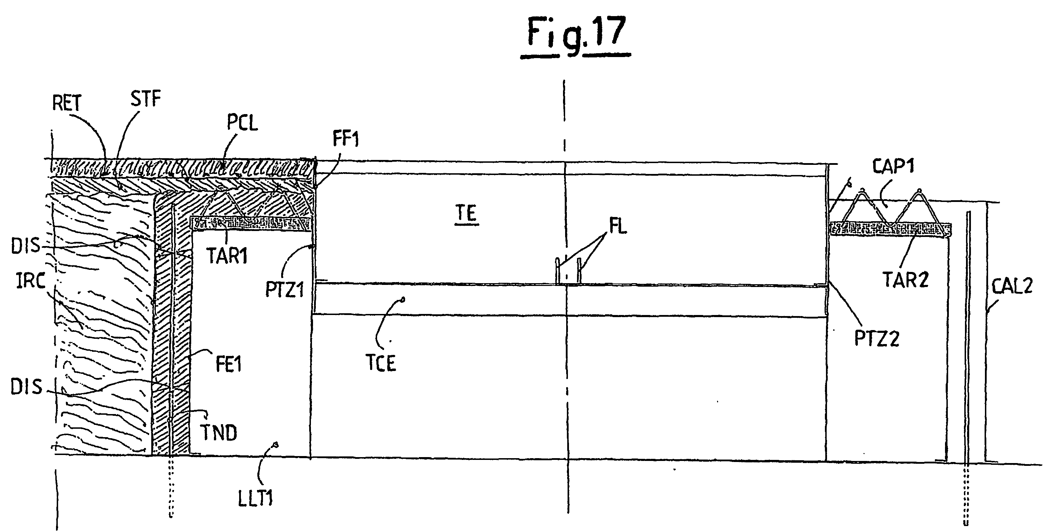

Figure 17 shows the vertical section of the formwork with the casting (shown only in the left hand side of the drawing) and the rolled and compacted inert material IRC; the construction sequence provides for an initial concrete foundation STF in a single operation to cover all the area constructed up to this point around the formwork, including the surrounding layer of rolled and compacted inert material IRC as high as about 8. centimeters under the level of the finished flooring; then during a second stage the standard under-paving grid RET is placed in position, and later still the final floor surface is cast PLC in a single operation and without seams, beginning preferably from the edges FF1, TE, FF2.

On the right hand side of the drawing, CAL1 and CAP1 are left visible in position for comparison.

With this system it is possible to prevent all the well-known phenomena that lead to pavement surface breaking, caused by castings made at different times.

Figure 17 also shows the reduced final thickness of the overhanging side portions that, according to the weight, can measure even only 25 cms, instead of the usual 60-80 cms, with an obvious large saving in materials.

The overhanging side portions that were extended out from the formwork by being positioned on the elements PPP1, FE1, LLT1 and respectively PPP2, FE2, LLT2, harden after the casting with the reinforcing structure inside, respectively TAR1, TAR2, and they become not only self-bearing, but also contribute towards bearing the thrust transmitted to the central piping TCE by the raising cylinder of the ramp, transmitted preferably through the flanges FL, by its reaction in the case of safety blocking, and by the fully loaded lift fork that transits the area.

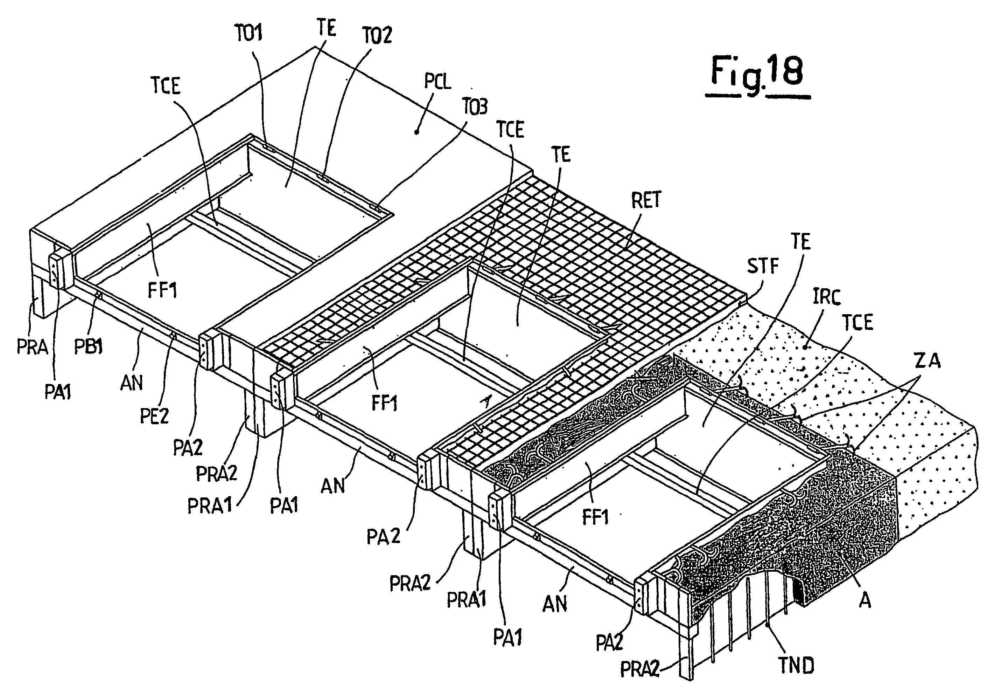

Figure 18 shows a construction sequence of the complete system obtainable using the formwork described in this invention.

In particular, the following steps have been emphasised:
- execution of the pits as shown in figure 7;
- assembly of the formwork (in the example shown here - adjacent) with the vertical reinforcing rods TND positioned in the spaces between the internal perimeter of the formwork and the recoverable external forms;
- casting of the perimeter of the first formwork (indicated by A in figure 18);
- rear filling and eventually side filling with rolled and compacted inert material IRC;
- casting of the foundation STF up to a height of about 8 cm underneath the flooring surface PLC;
- application of the under-flooring grid RET;
- casting the flooring surface PLC starting from the angle iron edges of the pit;

As well as permitting rapid consecutive casting of the various layers as far as the flooring surface PLC the proposed system also guarantees a uniform surface on the face of the building, eliminating the well-known changes in colour and texture of the concrete caused by the different casting layers, with the obvious advantages regarding function and appearance.

This is possible because the external surface remains completely covered by the metal plates of the formwork that remains in position, and that are preferably hot galvanized.

This aspect also presents a considerable advantage compared to traditional methods, that, on the contrary, present a further disadvantage in that the vertical sides of the tailgate space are built in plain concrete, easily broken by incorrect or accidental manoeuvring of the tailgate when entering and approaching the platform.

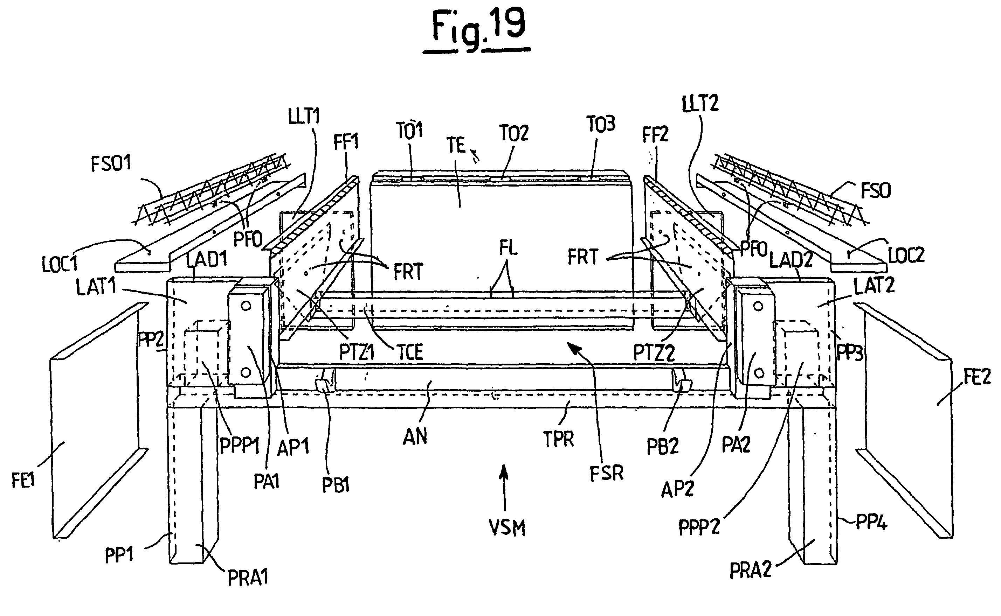

In another method, preferable and given as an example, but not limitative (seen in figure 19) of the integral formwork according to the invention, the two side joists TAR1, TAR2 are replaced by two plates LOC1, LOC2, appropriately shaped to be positioned over the elements PPP1, FE1, LLT1 and respectively, PPP2, FE2, LLT2.

Therefore, the iron rods FSO1, FSO2 are positioned over the plates LOC1, LOC2, preferably with extra adherence and preformed in "W" shape, of a well recognised type for the formation of reinforced concrete flooring; the iron rods FSO1, FSO2 are long and strong enough to guarantee the bearing of the overhanging portions.

These preformed iron rods FSO1, FSO2, are also preferably equipped on one side with at least one plate PFO, preferably drilled with holes for fixing the rods FSO1, FSO2 to the side panels, respectively FF1, FF2 by normally using bolts that pass through at least one hole FRT envisaged in the flanges PTZ1, PTZ2 and in the side panels FF1, FF2 in order to maintain the rods FSO1, FSO2 at a certain distance from both sides FF1, FF2, and from each of the plates underneath LOC1, LOC2 in order to surround the rods FSO1, FSO2 completely with concrete to obtain a kind of slab-beam.

The distance of each plate LOC1, LOC2 from the preformed rods FSO1, FSO2 is preferably maintained from opposite parts with the edge facing downwards towards the right-angled adjacent joins, with respect to the longitudinal rods below the element FSO1, FSO2 that in this manner will certainly be surrounded by concrete.

This further preferred embodiment is mainly aimed at reducing the weight of the prefabricated joists TAR1, TAR2 to a level that can be positioned manually by a single operator.

From the description provided, the characteristics of integral formwork of this invention are made very clear, just as all the advantages to be gained with this method.

However it is obvious that numerous other variants can be applied to the formwork in question without modifying the innovative principles included in this invention, and it is just as clear that in the practical application of the invention, the materials, form and measurements of the details that are illustrated, can be varied according to the needs, or replaced with others that are technically equivalent.

## Claims

1. Integral formwork for the construction of pits (20) for loading ramps (10), wherein each ramp (10) comprises at least one metal platform (11) on which an articulated extension (12) is applied so that the flatbeds (13) of vehicles (14) can be connected to a platform (15) for the transporting of goods, said formwork including a set of reinforced panels, piping and sections, assembled together to form a disposable structure, and said pits (20) including at least one recess (18, 22) for the insertion of a tailgate (19), **characterised in that** said formwork further includes at least two rigid side panels (FF1, FF2), a front connecting beam (AN), composed of at least a first horizontal metal section (TPR) whose ends are fixed to second shaped sections (PRA1, PRA2) defining a width of at least one space (VSM) for the insertion of said tailgate (19), and third sections (AP1, AP2), fixed to said first section (TPR), suitable for connecting all the elements of the formwork and for fixing a plurality of front buffers (PA1, PA2) and side plates (LAT1, LAT2).

2. Integral formwork according to claim 1, **characterised in that** said pits (20) are prefabricated or they are built so that said formwork remains included inside a cast concrete.

3. Integral formwork according to claim 1 **characterised in that** said second sections (PRA1, PRA2) and said plates (LAT1, LAT2) terminate with elements (PP1, PP2, PP3, PP4) folded back towards the rear, said plates (LAT1, LAT2) being configured so that they terminate at the top with a side (LAD1, LAD2) folded backwards with parallelepiped elements (PPP1, PPP2) on the internal side.

4. Integral formwork according to claim 3, **characterised in that** it also includes two stiffened external sides (FE1, FE2), a head (TE), composed of a metal plate element, reinforced with sections having at least one hinge piping element (TO1, TO2, TO3) and at least one strong rod (ZA), two side head plates (LLT1, LLT2), folded over towards the interior of the pit (20), and at least one reinforced joist (TAR1, TAR2) in brick tile and/or concrete, in which gripping iron rods are inserted conformed according to a composition of reinforced prefabricated joists for.floor slabs.

5. Integral formwork according to claim 3, **characterised in that** it includes at least one central joist (TCE) whose ends are fixed to plates (PTZ1, PTZ2) and at least one support flange (FL) of said loading ramp (10) as well as the means for fixing and assembling the various said parts.

6. Integral formwork according to claim 3 **characterised in that** said front connecting beam (AN) forms an external face on the loading platform (15) for the goods, and is designed to spread the weight of the casting on at least two side portions (AG1, AG2), that form an unsupported overhanging extension (23) that, in turn, forms the space (VSM) for the insertion of the tailgate (19), said space (VSM) being defined by a first external side panel (FE1), by a first head plate (LLT1), by said head (TE), by a second head plate (LLT2), and by a second external side panel (FE2) that is connected to said front connecting beam (AN) to present an opening that is wider than the width of an upper pit (FSR) defined by said formwork, used for the installation of said loading ramp (10) and composed of an initial vertical section (AP1), an internal side panel (FF1), said head (TE) and an external side panel (FF2), that is connected to a second vertical section (AP2) and to said front connecting beam (AN).

7. Integral formwork according to claim 6, **characterised in that** a joist (TCE) is applied below said side panels (FF1, FF2) and equipped at each end with at least two plates (PTZ1, PTZ2), positioned on the exterior of said side panels (FF1, FF2) and fixed to the sides to bear the weight of the casting that forms said two side portions (AG1, AG2) that form the overhanging extension.

8. Integral formwork according to claim 3 **characterised in that** it provides for the use of side forms (CAL1, CAL2) and rear form (CAP1), designed to be used for carrying out the casting up to an established height, in order to create single or multiple loading bays through the direct fixing and connection of adjacent formwork, at least one of said forms (CAL1) being maintained at an established distance by an internal perimeter portion of said space (VSM) for tailgate insertion (19), and by a plurality of shims (DIS) and containing within this distance a plurality of rods (TND) previously positioned in a base slab (SOL).

9. Integral formwork according to claim 8, **characterised in that** a rolled and compacted inert material (IRC) is piled against the casting in rear and side positions where said formwork is the first or last of a row, or in the case of a single formwork.

10. Integral formwork according to claim 9, **characterised in that** a concrete foundation (STF) is cast in a single operation, to cover all construction around said formwork, including the layer of said rolled and compacted inert material (IRC), as far as an established height that is lower than the pre-established height of the finished flooring surface, an under-paving grid (RET) being laid above said structure, followed by the casting of the final flooring surface (PCL) in a single operation, starting from the edges of the pit.

11. Integral formwork according to claim 6 **characterised in that** it envisages as an alternative, a plurality of side joists (TAR1, TAR2) or plates (LOC1, LOC2), specially shaped so that they can be positioned over said external sides (FE1, FE2), on the parallelepipeds (PPP1, PPP2) and on the side head plates (LLT1, LLT2), plus complementary reinforcing stiffening means (FSO1, FSO2, PFO), designed to form a slab-beam system.

12. Integral formwork according to claim 6 **characterised in that** said external sides (FE1, FE2) terminate at the top and bottom with two edges folded over towards the interior of the formwork, and said head (TE) is composed preferably of a plate that terminates at the bottom with an edge folded inwards, towards the interior of the pit (20), and at the top with a folded edge or a reinforcing section on which a plurality of piping (TO1, TO2, TO3) are applied, said piping (TO1, TO2, TO3) being inserted in comb fashion between other portions of piping present on the platform of the ramp (11), and designed with the insertion of special rods to form a head hinge between the ramp (10) and the platform (15).

13. Integral formwork according to claim 12, **characterised in that** a plurality of rods (ZA) are inserted behind said piping portions (TO1, TO2, TO3).

## Patentansprüche

1. Integrale Schalung für die Herstellung von Gruben (20) für Laderampen (10), wobei jede Rampe (10) zumindest eine Metallplattform (11) aufweist, an welcher eine gelenkige Erweiterung (12) derart angebracht ist, dass die Ladeflächen (13) von Fahrzeugen (14) mit einer Plattform (15) für das Transportieren von Gütern verbunden werden kann, wobei die Schalung einen Satz von Verstärkungspaneelen, Rohren und Abschnitten aufweist, die miteinander verbunden sind, um eine verlorene Struktur zu bilden, und die Gruben (20) umfassen zumindest eine Vertiefung (18, 22) für das Einfügen einer Heckklappe (19), **dadurch gekennzeichnet, dass** die Schalung ferner zumindest zwei steife Seitenpaneele (FF1, FF2), einen vorderen Verbindungsträger (AN), der aus zumindest einem ersten horizontalen Metallabschnitt (TPR), dessen Enden an zweiten geformten Abschnitten (PRA1, PRA2) befestigt sind, die eine Breite zumindest eines Raums (VSM) für das Einfügen der Heckklappe(19) definieren, zusammengesetzt ist, und dritte Abschnitte (AP1, AP2), die an dem ersten Abschnitt (TPR) befestigt sind und zum Verbinden aller Elemente der Schalung und zum Fixieren einer Mehrzahl von Frontpuffern (PA1, PA2) und Seitenplatten (LAT1, LAT2) geeignet sind, aufweist.

2. Integrale Schalung nach Anspruch 1, **dadurch gekennzeichnet, dass** die Gruben (20) vorgefertigt sind oder dass sie derart gebaut sind, dass die Schalung in einem gegossenen Beton eingeschlossen bleibt.

3. Integrale Schalung nach Anspruch 1, **dadurch gekennzeichnet, dass** die zweiten Abschnitte (PRA1, PRA2) und die Platten (LAT1, LAT2) mit Elementen (PP1, PP2, PP3, PP4) enden, die nach hinten zurückgefaltet sind, wobei die Platten (LAT1, LAT2) derart aufgebaut sind, dass sie auf der Oberseite mit einer Seite (LAD1, LAD2) enden, die mit würfelförmigen Elementen (PPP1, PPP2) auf der inneren Seite zurückgefaltet sind.

4. Integrale Schalung nach Anspruch 3, **dadurch gekennzeichnet, dass** sie ebenso zwei ausgesteifte äußere Seiten (FE1, FE2), einen Kopf (TE), der aus einem Metallplattenelement, das mit Abschnitten verstärkt ist, die zumindest ein Gelenkrohrelement (TO1, TO2, TO3) und zumindest einen starken Stab (ZA) besitzt, verstärkt ist, zwei Seitenkopfplatten (LLT1, LLT2), die zum Inneren der Grube (20) umgefaltet sind und zumindest einen verstärkten Träger (TAR1, TAR2) aus Mauerwerk und/oder Beton, in welchem Greifeisenstäbe eingefügt sind, die entsprechend einer Zusammensetzung bewehrter, vorgefertigter Träger für Geschossdecken angepasst sind, aufweist.

5. Integrale Schalung nach Anspruch 3, **dadurch gekennzeichnet, dass** sie zumindest einen zentralen Träger (TCE) aufweist, dessen Enden an Platten (PTZ1, PTZ2) befestigt sind, und zumindest einen Tragflansch (FL) der Laderampe (10) sowie die Mittel zum Fixieren und Zusammenbauen der verschiedenen Teile aufweist.

6. Integrale Schalung nach Anspruch 3, **dadurch gekennzeichnet, dass** der vordere Verbindungsträger (AN) eine äußere Fläche der Ladeplattform (15) für die Waren bildet und dazu ausgelegt ist, das Gewicht des Gießens auf mindestens zwei Seitenabschnitte (AG1, AG2), die eine ungelagerte, auskragende Erweiterung (23) bilden, die wiederum den Raum (VSM) für das Einfügen der Heckklappe (19) bildet, zu verteilen, wobei der Raum (VSM) durch ein erstes außenseitiges Paneel (FE1), durch eine erste Kopfplatte (LLT1), durch den Kopf (TE), durch eine zweite Kopfplatte (LLT2) und durch ein zweites außenseitiges Paneel (FE2) definiert ist, das mit dem ersten Verbindungsträger (AN) verbunden ist, um eine Öffnung darzustellen, die breiter ist als die Breite einer oberen Grube (FSR), die durch die Schalung definiert ist, verwendet für den Einbau der Laderampe (10) und aus einem anfänglich vertikalen Abschnitt (AP1), einem innenseitigen Paneel (FF1), dem Kopf (TE) und einem außenseitigen Paneel (FF2), das mit einem zweiten vertikalen Abschnitt (AP2) und dem ersten Verbindungsträger (AN) verbunden ist, zusammengesetzt ist.

7. Integrale Schalung nach Anspruch 6, **dadurch gekennzeichnet, dass** ein Träger (TCE) unterhalb der Seitenpaneele (FF1, FF2) aufgebracht ist und an jedem Ende mit mindestens zwei Platten (PTZ1, PTZ2) ausgestattet ist, die auf der Außenseite der Seitenpaneele (FF1, FF2) positioniert und an den Seiten befestigt sind, um das Gewicht des Gusses zu tragen, der die zwei Seitenabschnitte (AG1, AG2) bildet, welche die auskragende Erweiterung bilden.

8. Integrale Schalung nach Anspruch 3, **dadurch gekennzeichnet, dass** sie die Verwendung von Seitenformen (CAL1, CAL2) und einer hinteren Form (CAP1) vorsieht, die dazu ausgelegt ist, zum Ausführen des Gießens bis zu einer bestimmten Höhe verwendet werden, um einzelne oder mehrere Ladebuchten durch das direkte Fixieren und Verbinden einer benachbarten Schalung zu erzeugen, wobei zumindest eine der Formen (CAL1) durch einen Innendurchmesserabschnitt des Raums zum Einfügen der Heckklappe (19) und durch eine Mehrzahl von Abstandshaltern (DIS) in einem bestimmten Abstand gehalten ist, und die in diesem Abstand eine Mehrzahl von Stäben (TND) enthalten, die zuvor in einer Bodenplatte (SOL) positioniert wurden.

9. Integrale Schalung nach Anspruch 8, **dadurch gekennzeichnet, dass** ein gewalztes und verdichtetes, inertes Material gegen den Guss auf hinteren und seitlichen Positionen geschüttet ist, auf welchen die Schalung die erste oder letzte einer Reihe ist, oder in dem Falle einer einzelnen Schalung.

10. Integrale Schalung nach Anspruch 9, **dadurch gekennzeichnet, dass** ein Betonfundament (STF) in einem einzelnen Vorgang gegossen wird, um die gesamte Konstruktion um die Schalung herum abzudecken, einschließlich der Lage des gewalzten und verdichteten inerten Materials (IRC), bis zu einer bestimmten Höhe, die geringer ist als die bestimmte Höhe der fertigen Bodenoberfläche, wobei ein Unterbodenrost (RET) oberhalb der Struktur abgelegt ist, gefolgt durch das Gießen der endgültigen Bodenoberfläche (PCL) in einem einzelnen Vorgang, ausgehend von den Rändern der Grube.

11. Integrale Schalung nach Anspruch 6, **dadurch gekennzeichnet, dass** sie als eine Alternative eine Mehrzahl von Seitenträgern (TAR1, TAR2) oder Platten (LOC1, LOC2) vorsieht, die speziell derart geformt sind, dass sie über die äußeren Seiten (FE1, FE2), auf die Würfel (PPP1, PPP2) und auf die Seitenkopfplatten (LLT1, LLT2) positioniert werden können, plus komplementäre, verstärkende Ausstattungsmittel (FSO1, FSO2, PFO), die dazu ausgelegt sind, ein Decken-Trägersystem zu bilden.

12. Integrale Schalung nach Anspruch 6, **dadurch gekennzeichnet, dass** die äußeren Seiten (FE1, FE2) auf der Oberseite und der Unterseite mit zwei Rändern enden, die zum Inneren der Schalung umgefaltet sind, und der Kopf (TE) ist bevorzugt aus einer Platte aufgebaut, die an dem Boden mit einem nach innen gefalteten Rand endet, zum Inneren der Grube (20), und auf der Oberseite mit einem gefalteten oder einem Verstärkungsabschnitt, an welchem eine Mehrzahl von Rohren (TO1, TO2, TO3) angebracht sind, wobei die Rohre (TO1, TO2, TO3) kammartig zwischen anderen Abschnitten von Rohren eingefügt sind, die an der Plattform der Rampe (11) vorhanden sind, und mit dem Einfügen spezieller Stäbe ausgelegt sind, um ein Kopfgelenk zwischen der Rampe (10) und der Plattform (15) zu bilden.

13. Integrale Schalung nach Anspruch 12, **dadurch gekennzeichnet, dass** eine Mehrzahl von Stäben (ZA) hinter den Rohrabschnitten (TO1, TO2, TO3) eingefügt sind.

## Revendications

1. Système de coffrage solidaire pour la construction de fosses (20) pour rampes de chargement (10), dans lequel chaque rampe (10) comprend au moins une plate-forme métallique (11) sur laquelle une extension articulée (12) est appliquée d'une manière telle que les plateaux (13) de véhicules (14) peuvent être connectés à une plate-forme (15) pour le transport de marchandises, ledit système de coffrage incluant au moins un jeu de panneaux de renforcement, de tuyauteries et de sections, assemblés entre eux pour former une structure à usage unique, et lesdites fosses (20) incluant au moins un évidement (18, 22) pour l'insertion d'un hayon (19), **caractérisé en ce que** ledit système de coffrage inclut en outre au moins deux panneaux latéraux rigides (FF1, FF2), une poutre frontale de connexion (AN) composée d'au moins une première section métallique horizontale (TPR) dont les extrémités sont fixées à des deuxièmes sections configurées (PRA1, PRA2) définissant une largeur d'au moins un espace (VSM) pour l'insertion dudit hayon (19), et des troisièmes sections (AP1, AP2), fixées à ladite première section (TPR), aptes à connecter tous les éléments du système de coffrage et à fixer une pluralité de tampons frontaux (PA1, PA2) et de plaques latérales (LAT1, LAT2).

2. Système de coffrage solidaire selon la revendication 1, **caractérisé en ce que** lesdites fosses (20) sont préfabriquées, ou elles sont construites d'une manière telle que ledit système de coffrage reste inclus à l'intérieur d'un bloc de béton coulé.

3. Système de coffrage solidaire selon la revendication 1, **caractérisé en ce que** lesdites deuxièmes sections (PRA1, PRA2) et lesdites plaques (LAT1, LAT2) se terminent par des éléments (PP1, PP2, PP3, PP4) repliés vers l'arrière, lesdites plaques (LAT1, LAT2) étant configurées d'une manière telle qu'elles se terminent chacune au sommet par une face (LAD1, LAD2) repliée en arrière avec des éléments parallélépipédiques (PPP1, PPP2) sur leur face interne.

4. Système de coffrage solidaire selon la revendication 3, **caractérisé en ce qu'**il inclut aussi deux faces externes raidies (FE1, FE2), une tête (TE), composée d'un élément de tôle métallique, renforcée par des sections incluant au moins un élément de tuyauterie (TO1, TO2, TO3) pour charnière et au moins une tige robuste (ZA), deux plaques de tête (LLT1, LLT2), repliées vers l'intérieur de la fosse (20), et au moins une poutrelle renforcée (TAR1, TAR2) en carreau de briquetage et/ou en béton, dans laquelle des tiges de fer de saisie sont insérées en étant conformées selon une composition de poutrelles préfabriquées renforcées pour dalles de plancher.

5. Système de coffrage solidaire selon la revendication 3, **caractérisé en ce qu'**il inclut au moins une poutrelle centrale (TCE) dont les extrémités sont fixées à des plaques (PTZ1, PTZ2) et au moins une bride de support (FL) de ladite rampe de chargement (10) ainsi que des moyens de fixation et d'assemblage desdits divers éléments.

6. Système de coffrage solidaire selon la revendication 3, **caractérisé en ce que** ladite poutre frontale de connexion (AN) forme une face externe de la plate-forme de chargement (15) pour les marchandises, et est configurée de manière à répartir le poids de la coulée sur au moins deux parties latérales (AG1, AG2) qui forment une extension en surplomb non supportée (23) qui forme elle-même l'espace (VSM) pour l'insertion du hayon (19), ledit espace (VSM) étant défini par un premier panneau latéral externe (FE1), par une première plaque de tête (LLT1), par ladite tête (TE), par une deuxième plaque de tête (LLT2), et par un deuxième panneau latéral externe (FE2) qui est connecté à ladite poutre frontale de connexion (AN) pour présenter une ouverture qui est plus large que la largeur d'une fosse supérieure (FSR) définie par ledit système de coffrage, utilisée pour l'installation de ladite rampe de chargement (10) et composée d'une section verticale initiale (AP1), d'un panneau latéral interne (FF1), de ladite tête (TE) et d'un panneau latéral externe (FF2) qui est connecté à une deuxième section verticale (AP2) et à ladite poutre frontale de connexion (AN).

7. Système de coffrage solidaire selon la revendication 6, **caractérisé en ce qu'**une poutrelle (TCE) est appliquée au-dessous desdits panneaux latéraux (FF1, FF2), et équipée à chaque extrémité d'au moins deux plaques (PTZ1, PTZ2) positionnées sur l'extérieur desdits panneaux latéraux (FF1, FF2) et fixées aux faces latérales pour porter le poids de la coulée qui forme lesdites parties latérales (AG1, AG2) qui forment l'extension en surplomb.

8. Système de coffrage solidaire selon la revendication 3, **caractérisé en ce qu'**il permet l'utilisation de moules latéraux (CAL1, CAL2) et d'un moule arrière (CAP1), configurés pour être utilisés pour effectuer la coulée jusqu'à une hauteur établie, afin de créer une baie unique, ou de multiples baies, de chargement par fixation et connexion directes d'un système de coffrage adjacent, au moins l'un desdits moules (CAL1) étant maintenu à une distance établie par une partie de périmètre externe dudit espace (VSM) pour insertion du hayon (19), et par une pluralité de cales (DIS) et contenant à l'intérieur de cette distance une pluralité de tiges (TND) positionnées préalablement dans une dalle de base (SOL).

9. Système de coffrage solidaire selon la revendication 8, **caractérisé en ce qu'**une matière inerte roulée et compactée (IRC) est empilée contre la coulée dans des positions arrière et latérales dans le cas où ledit système de coffrage est le premier ou le dernier d'une rangée, ou dans le cas d'un système de coffrage unique.

10. Système de coffrage solidaire selon la revendication 9, **caractérisé en ce qu'**une fondation de béton (STF) est coulée en une opération unique, de manière à couvrir toute la construction qui entoure ledit système de coffrage, y compris la couche de ladite matière inerte (IRC) roulée et compactée, jusqu'à une hauteur établie qui est inférieure à la hauteur préétablie de la surface de planchéiage finie, une grille (RET) de sous-pavement est disposée au-dessus de ladite structure, et la coulée de la surface finale de planchéiage (PCL) est ensuite effectuée en une opération unique, en commençant à partir des bords de la fosse.

11. Système de coffrage solidaire selon la revendication 6, **caractérisé en ce qu'**il envisage comme variante une pluralité de poutrelles (TAR1, TAR2) ou de plaques (LOC1, LOC2) latérales, spécialement configurées de façon à pouvoir être positionnées au-dessus desdites faces externes (FE1, FE2), sur les parallélépipèdes (PPP1, PPP2) et sur les plaques de tête latérales (LLT1, LLT2), ainsi qu'un moyen raidisseur complémentaire de renforcement (FSO1, FSO2, PFO) configuré pour former un système de poutres de dalle.

12. Système de coffrage solidaire selon la revendication 6, **caractérisé en ce que** lesdits faces externes (FE1, FE2) se terminent au sommet et à la base par deux bords repliés vers l'intérieur du système de coffrage, et ladite tête (TE) est composée de préférence d'une plaque qui se termine à la base par un bord plié vers l'intérieur, en direction de l'intérieur de la fosse (20), et au sommet par un bord plié ou une section de renforcement sur laquelle une pluralité de tuyauteries (TO1, TO2, TO3) est appliquée, lesdites tuyauteries (TO1, TO2, TO3) étant insérées à la manière d'un peigne entre d'autres parties de tuyauteries présentes sur la plate-forme de la rampe (11), et configurées pour former, avec l'insertion de tiges spéciales, une charnière de tête entre la rampe (10) et la plate-forme (15).

13. Système de coffrage solidaire selon la revendication 12, **caractérisé en ce qu'**une pluralité de tiges (ZA) est insérée derrière lesdites parties de tuyaux (TO1, TO2, TO3).
